# EUROPEAN PATENT APPLICATION

(11) **EP 1 161 858 A1**
(43) Date of publication of application: **12.12.2001**
(21) Application number: 00127307.7
(22) Date of filing: 13.12.2000
(51) Int. Cl.: A01J 5/10, A01J 5/12

(54) **Adjustable-phase pulsator for milking-machines**

(30) Priority: 06.06.2000 IT MI200349 U
(71) Applicant: INTERPULS S.P.A., 42020 Albinea, Reggio Emilia (IT)
(72) Inventor: Sicuri, Roberto, 43100 Parma (IT); Nicolini, Gabriele, 42042 Fabbrico (Reggio Emilia) (IT)
(74) Representative: Giambrocono, Alfonso, Dr. Ing.

(57) **Abstract**

The pulsator (10) for milking plants comprises removable means (26) for constricting that port (28) of the pulsator (10) which communicates with the vacuum source. Means (30.1, 30.2) can be provided for also constricting the discharge ports (25.1, 25.2) of the pulsator (10).

## Description

This invention relates to pulsators for milking plants, i.e. those devices which enable a so-called pulsation channel, connected to a milking unit of the plant, to be connected alternately to atmosphere or to a suction source (commonly known in the sector as a "vacuum" source)

A known pulsator is for example that described in Italian patent 1268592 of the same proprietor as the present application. In that pulsator, the means for connecting the pulsation channel alternately to a first conduit communicating with the vacuum source and to a second conduit connected to atmosphere comprises two separate and distinct membrane valves, each housed in its own seat. The valving element of each valve is movable elastically, by the action of the pressure of the atmospheric air in said seats, between a rest position and a deformed position so as to close and open respectively a first aperture connecting the first conduit to the pulsation channel and a second aperture connecting the second conduit also to the pulsation channel. The two said seats are connected, via a plurality of further conduits and valve means, to the vacuum source or to atmsphere such that only one of said apertures is open at a time.

The pulsator illustrated in the aforesaid patent is of the single pulsation channel type. However, as also stated in the description of the aforesaid patent, the pulsator is advantageously formed with two separate pulsation channels. This is easily obtained by simply constructing a pulsator formed from two parts forming a single device, of which one part is similar to that illustrated in the figures of the aforesaid patent and the other is equal thereto but symmetrically disposed, the two respective channels for connection to the vacuum source converging into a single vacuum source connection nozzle.

In short, it can therefore be stated (using the jargon of the sector) that the purpose of the pulsator (whether single or double, whether of pneumatic type or of electronic type) is to draw vacuum from a vacuum source and distribute it in a balanced manner to the respective tube stems of a milking unit via a relative pulsation channel (in the case of a double pulsator there are two separate mutually independent pulsator channels, one for each pair of tube stems of the milking unit), a pulsation channel being connected to the interspace between a relative tube stem and the corresponding elastically deformable sheath intended to receive one of the teats of the animal to be milked. This enables a cyclic contraction and relaxation movement to be impressed on each sheath, to be able to implement the milking and massaging operation.

Consequently, when the milking plant is in operation, in the pulsation channel or channels of the pulsator the pressure has a value which decreases and increases with time. The pulsation cycle always consists of four separate phases, namely:
**Phase a:** the interspace between the tube stem and sheath is at atmospheric pressure and sheath is initially contracted about the teat, the action of the pulsator enabling air to be evacuated from the interspace until the predetermined degree of vacuum is obtained therein, with the result that in the sheath gradually distends.
**Phase b:** the interspace is initially at the degree of vacuum obtained at the end of the preceding phase, the same degree of vacuum existing inside the sheath which, remaining distended, enables the milk to flow from the teat.
Phases **a** and **b** together are known as the **milking stage**.
**Phase c:** the action of the pulsator gradually feeds atmospheric air into the interspace until atmospheric pressure has nearly been attained, with the result that the sheath contracts gradually about the teat as the degree of milking vacuum inside the teat remains constant, this causing the flow of milk from the teat to cease.
**Phase d:** atmospheric pressure has been reached inside the interface, with the sheath completely contacted about the teat (this enabling the teat to be decongested of blood), so returning exactly to the starting condition of **phase a**.
Phases **c** and **d** together are known as the **massaging stage.**

The aforedescribed cycle can be repeated indefinitely until all the milk has been removed.

It should be noted that the time duration of the four aforedescribed phases for a determined milking plant depends on the volume to be evacuated and the geometrical characteristics of the pulsator, and more precisely on those ports thereof which are connected respectively to atmosphere and to the vacuum source. It follows that the pulsator provides fixed time durations for the four aforedescribed phases. Obviously the **milking stage (a + b)** and the **massaging stage (c + d)** have a time duration depending on the aforesaid geometrical characteristics of the pulsator, the ratio of milking stage to massaging stage remaining fixed for a determined pulsator. For example in a pulsator in which this ratio is 60/40 the milking stage constitutes 60% of the time duration of the pulsator cycle, whereas the massaging stage constitutes 40% thereof.

As a pulsator can be mounted in different types of milking plant and the plant can be controlled in accordance with different milking "philosophies", it would clearly be very convenient to be able to vary for a determined pulsator the percentage time duration of the four phases of the pulsation cycle, in order to be able to optimise the operation of the pulsator on the basis of the relative milking plant and the relative control philosophy for the plant. This is therefore an object of the present invention.

A further object is to provide a pulsator which is adaptable to different milking plants.

Before stating how the aforedescribed objects were successfully attained, it should be noted that if phase **a** of the pulsator cycle is able to be varied, a corresponding variation in phase **b** is obtained, while the percentage time duration of the milking stage (**a** + **b**) remains unchanged. Likewise, if phase **c** can be varied, a corresponding variation in phase **d** is obtained, while the percentage time duration of the massaging stage (**c** + **d**) remains unchanged.

The pulsator of the present invention is characterised by comprising: first removable means for constricting that port of the pulsator which communicates with the vacuum source; and second means for constricting that port of the pulsator which communicates atmosphere (so-called discharge port).

In particular, this can be achieved comfortably and at low cost by making said first means in the form of a series of constricting elements to be disposed, when required, in correspondence with said port to reduce the free area of the port to a greater or lesser extent. These constricting elements can consist for example of a series of diaphragms each presenting a free port or aperture of different area.

The second constricting means can consist for example of a series of elements removably applicable in a suitable position within the pulsator in order to constrict the discharge port or ports to a greater or lesser extent. If the discharge ports are annular, these constricting elements can be rings applicable to the discharge ports to reduce their free area.

Alternatively, the second constricting means for the discharge port or ports can form one piece with that part of the pulsator which contains the discharge port or ports. In that case a whole series of these pulsator parts must be provided, each part differing from the others by the extent of free port area communicating with atmosphere.

The invention will be more apparent from the following description of one embodiment thereof. In this description reference is made to the accompanying drawings, in which:
Figure 1 is a vertical cross-section through a pulsator of the invention;
Figure 2 is a partial plan view thereof from below, taken on the line 2-2 of figure 1;
Figure 3 is a horizontal section therethrough taken on the horizontal plane of separation between the lower part of the pulsator and its central part, taken on the line 3-3 of figure 1;
Figure 4 is a front view of one of a series of diaphragms forming the removable means for varying that pulsator port which communicates with the vacuum sauce;
Figure 5 is a rear view thereof;
Figure 6 is a side view thereof in the direction of the arrow 6 of figure 5; and
Figure 7 is a cross-section therethrough on the line 7-7 of figure 5.

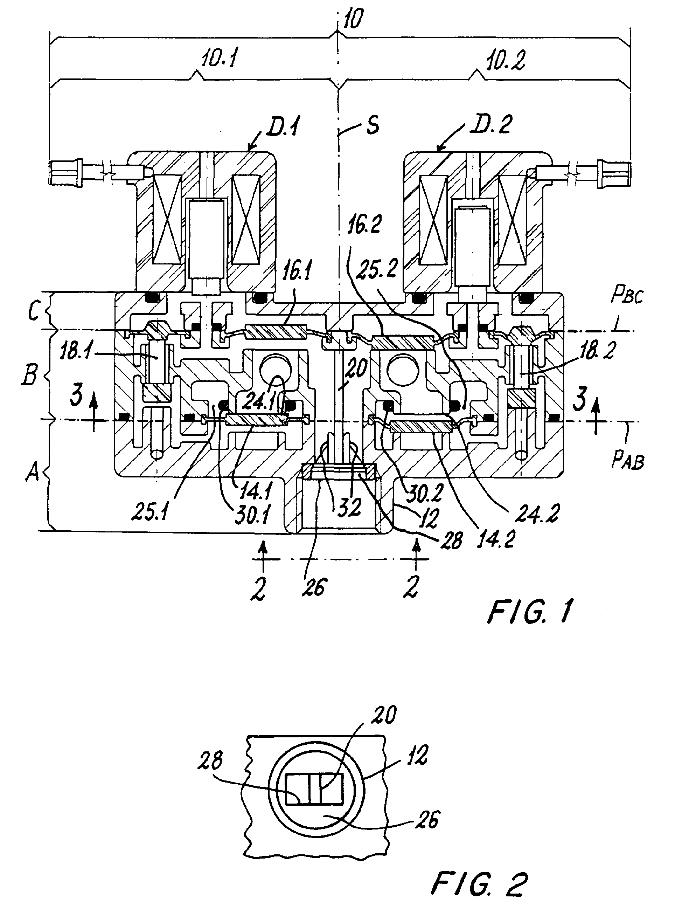

As can be seen, the pulsator 10 illustrated in Figure 1 is of the double type (of the kind described in the aforesaid Italian patent 1268592), and is provided with a single nozzle 12 which enables its two individual constituent pulsators (indicated in Figure 1 by 10.1 and 10.2 respectively and disposed symmetrically about the vertical plane which in Figure 1 is indicated by the line S.) to be connected to a source of vacuum (not shown). The nozzle 12 (which will be known hereinafter as the vacuum nozzle) is internally threaded to enable a tube (not shown but having its corresponding end externally threaded) to be screwed into it, its other end communicating with the vacuum source.

Before continuing with the description, it should be noted that when specific reference is to be made to parts of only one of the two individual pulsators 10.1 and 10.2 which form the double pulsator 10, these parts will be indicated by the relative reference number followed by 1 or 2 depending upon whether they pertain to the pulsator 10.1 or to the pulsator 10.2.

As can be seen from Figure 1, the body of the pulsator 10 (leaving out of consideration the solenoid valves D.1 and D.2, the four valving elements 14.1, 16.1, 14.2, 16.2, the membrane valves and the valving elements 18.1 and 18.2 of the two pilot valves) is basically composed of three mutually separable parts A, B and C, bounded by a horizontal planes P_{AB} and P_{BC}.respectively.

Neither the structure of the double pulsator obtained nor its operation will be described in detail, as these are apparent to the expert of the art, they in any event not forming part of the present invention (if of interest, reference should be made to the said patent 1268592). It will be merely stated here that the port bounded by the vacuum nozzle 12 communicates (when the relative valving element 16.1 or 16.2 is in its raised position, as is the case of the valving element 16.1) with atmosphere in a manner not shown in the drawings. This communication is however interrupted when the valving elements 16.1 and 16.2 are in their lowered position (as in the case of the valving element 16.2 of figure 1)

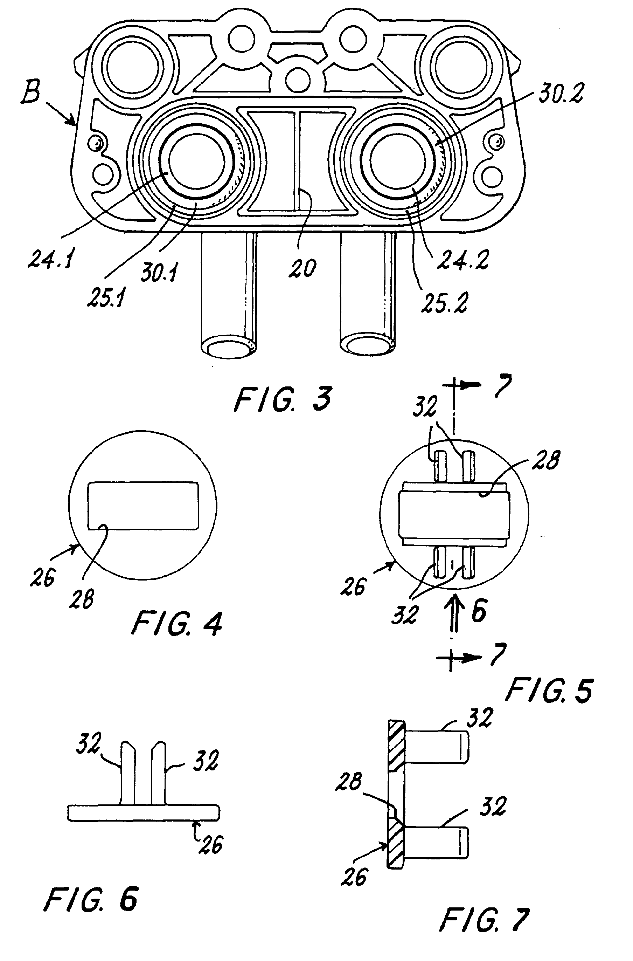

As can be seen from Figures 1 and 3, within the vacuum nozzle 12 there is disposed, under slight forcing, a diaphragm 26 (better seen in Figures 4-7), presenting a rectangular aperture 28. Consequently the diaphragm 26 limits the pulsator port communicating with the vacuum source. As can be seen from Figures 5-7, the diaphragm 26 is provided with four perpendicular elastic lugs 32 which enable the diaphragm 26 to be retained in position once inserted into the nozzle 12 by slight forcing such that the lugs 32 lie straddling the vertical rib 20 common to the individual pulsators 10.1 and 10.2. An entire series of diaphragms of the same type as the diaphragm 26 can be provided, each having a free port aperture 28 different from that of the others (the aperture not necessarily being rectangular), so that by selecting the appropriate diaphragm the vacuum feed to the pulsator can be adjusted (even if approximately, however if the number of diaphragms 26 of the series is sufficient, adjustment is sufficiently accurate), so consequently enabling the percentage time duration of the phase a to be adjusted.

In practice, startling with a minimum percentage duration of phase a corresponding to the absence of diaphragms 26 in the suction nozzle 12, the value can be gradually increased by inserting into the vacuum nozzle 12, as required, diaphragms 26 with an increasingly smaller aperture 28. As already stated, adjusting phase **a** automatically results also in adjustment of phase **b**.

As can be seen from Figures 1 and 3, in the pulsator 10 there are also provided the so-called second constricting means (for varying that pulsator port communicating with atmosphere, known as the discharge port), these being formed from two rings 30.1 and 30.2 of elastic material, which are forced onto a relative annular projection 24.1 and 24.2 bounding a corresponding port closable by the valving element 14.1 or 14.2 of the membrane valves. Consequently the rings 30.1 and 30.2 enable the corresponding discharge ports 25.1 and 25.2 to be limited. This enables phase **c** to be adjusted. In particular, when the pulsator 10 is without the rings 30.1 and 30.2, the discharge ports have maximum area, this corresponding to minimum percentage duration of phase **c**. By providing a series of rings 30 of gradually increasing thickness (it has been found in practice that even two or three different rings are normally sufficient), the relative discharge port will gradually decrease (although obviously approximately), causing a corresponding increase in the percentage duration of phase **c** and hence a corresponding reduction in phase **d**.

The rings 30.1 and 30.2 can conveniently be of rubber or of a suitable elastic plastic material and be of toroidal shape (i.e. they can be common O-rings).

In another embodiment of the invention, that part of the pulsator body comprising the discharge port or ports is formed as a series of pieces each with a discharge port of different area. Consequently that piece suitable for the specific requirements can be selected from the series of available pieces. In particular, with reference to the pulsator 10 of figure 1, an entire series of central parts B be can be provided (in practice two or three are sufficient), differing from each other by having a different area of discharge port or ports.

In conclusion it should be noted that the use of the aforedescribed diaphragm 26 provides the pulsator 10 with a further significant advantage consisting of the fact that in a pulsator provided with this diaphragm, the variation in the degree of vacuum takes place basically without fluctuations, which instead are present in known pulsators. This is a significant advantage having a beneficial effect on the animals' health.

A further advantage is that with the pulsator of the present invention, the transient phases **a** and **c** can be controlled with the consequent possibility of controlling the phases **b** and **d**. This enables the pulsator to be "personalised" for each individual herd.

## Claims

1. A pulsator (10) for milking plants, **characterised by** comprising:
removable means (26) for constricting that port (28) of the pulsator (10) which communicates with the vacuum source; and
means (30.1, 30.2) for constricting the one or two discharge ports (25.1, 25.2).

2. A pulsator (10) as claimed in claim 1, wherein the constricting means consist of a series of constricting elements (26) to be disposed, as required, in correspondence with that port (28) communicating with the vacuum source.

3. A pulsator (10) as claimed in claim 2, wherein those constricting elements (26) to be disposed in correspondence with that port (28) communicating with the vacuum source are diaphragms (26) each presenting a free port (28) of different area.

4. A pulsator (10) as claimed in claim 3, wherein the free port (28) of the diaphragms (26) is rectangular in shape.

5. A pulsator (10) as claimed in claim 1, wherein the constricting means consist of a series of constricting elements (30.1, 30.2) to be removably positioned within the pulsator to constrict the discharge port or ports (25.1, 25.2).

6. A pulsator (10) as claimed in claim 5, in which the discharge port or ports (25.1, 25.2) are annular, their internal circumference being bounded by an annular rib (24.1, 24.2), wherein the constricting elements are elastic rings (30.1 and 30.2) applicable in correspondence with the annular ribs (24.1, 24.2) which internally bound the annular port or ports (25.1, 25.2).

7. A pulsator (10) as claimed in claim 1, the body of which is formed from different parts to be assembled together, wherein the constricting means form one piece with that part (B) of the body of the pulsator (10) containing the discharge port or ports (25.1, 25.2).

8. A double pulsator (10) as claimed in claim 1, wherein the pulsator body is formed of three parts (A, B, C) separated from each other along two parallel planes (P_{AB}, P_{BC}) perpendicular to the plane of symmetry (S) of the pulsator (10).

9. A double pulsator (10) as claimed in claims 8 and 1, wherein that part containing the discharge ports (25.1, 25.2) is the central part (B) of the pulsator (10).
